# EUROPEAN PATENT APPLICATION

(11) **EP 1 622 335 A1**
(43) Date of publication of application: **01.02.2006**
(21) Application number: 05016299.9
(22) Date of filing: 27.07.2005
(51) Int. Cl.: H04L 29/06, H04L 12/56

(54) **Method and apparatuses for authenticating a wireless terminal in a first network by a second network**

(30) Priority: 28.07.2004 JP 2004219458
(71) Applicant: NEC CORPORATION, Tokyo (JP)
(72) Inventor: Tamura, Toshiyuki, Tokyo (JP)
(74) Representative: Vossius & Partner

(57) **Abstract**

An authentication method according to the present invention includes transmitting primary identification information from a wireless terminal to a first network; routing the primary identification information from the first network to a second network (a3); performing an authentication by the second network (a6,a7) based on the primary identification information; and providing a service of the first network to the wireless terminal based on a result of the authentication by the second network.

## Description

This application claims priority to Japanese Patent Application 2004-219458, the disclosure of which is incorporated herein by reference.

The present invention relates to a communication network, a wireless terminal, an access server and an authentication method used therefor.

Recently, standardization has been promoted by 3GPP (3rd Generation Partnership Project) regarding mobile phones provided with wireless LAN access capability. (See, e.g., "3G Security; Wireless Local Area Network (WLAN) Interworking Security (Release 6), 6 Security Mechanisms" (3GPP TS 33.234 V6.1.0, pp. 20-42, June 2004) ).

The wireless LAN access standardized by 3GPP generally assumes that wireless LAN terminals, like conventional mobile terminals, are implemented with a SIM (Subscriber Identity Module) cards. Subscriber authentication by means of a SIM card implemented in a wireless LAN terminal is performed based on an authentication procedure specified by 3GPP, similarly to an authentication for a mobile terminal..

Therefore, related nodes, such as a wireless terminal, a wireless LAN access point and an access server, are required to conform to 3GPP standards.

Wireless LAN cards and computers with built-in wireless LAN function are already in wide-spread use, and it is a problem that such subscriber equipment cannot be applied to wireless LAN services in accordance with 3GPP specifications.

Further, it is a problem that subscriber equipment according to 3GPP specifications can not access wireless LAN without 3GPP specific functions. Therefore, wireless LAN networks are required to have specific functions so that subscriber equipment with 3GPP functions can access the wireless LAN.

.However, which such infrastructure equipment is useful for wireless LAN service providers, they are naturally expensive. This may prevent wireless LAN service providers that have already spread in society from permitting 3GPP subscribers to access their wireless LAN network.

An exemplary embodiment of the present invention includes a communication network wherein a wireless terminal may be provided with services by a first network based on an authentication performed by a second network other than the first network, even if the first network does not have functions according to the second network. As a non-limiting example, in a communication network of the present inventions, a wireless terminal may be provided with wireless LAN services by a wireless LAN network based on an authentication performed by a mobile operator according to 3GPP standards, even if the wireless LAN network is not provided with 3GPP capabilities.

Another exemplary embodiment of the present invention is to provide a communication system comprising a wireless LAN system, a wireless LAN terminal, a mobile network access system, in which a 3GPP mobile-phone subscriber can access the wireless LAN system, and to provide an authentication method used therefor.

A further exemplary object of the present invention is to enable the use of network system, such as a wireless LAN system or xDSL system, without 3GPP specific authentication function in conjunction with a mobile phone system according to 3GPP standard.

A authentication method according to the present invention comprises: transmitting identification information from a wireless terminal to a first network; routing the identification information from the first network to a second network; performing an authentication by the second network based on the identification information; and providing service of the first network to the wireless terminal based on a result of the authentication by the second network.

These and other features, aspects, and advantages of the present invention will become better understood with reference to the following description and accompanying drawings, which should not be read to limit the invention in any way, in which:

Figure 1 shows a wireless LAN system according to an exemplary embodiment of the present invention.

Figure 2 shows an exemplary structure of the wireless LAN terminal in Figure 1.

Figure 3 shows an exemplary structure of the access server in Figure 1.

Figure 4 shows an authentication operation according to an exemplary embodiment of the present invention.

Figure 5 shows an authentication operation according to another exemplary embodiment of the present invention.

An exemplary communication network system according to the present invention comprises a wireless terminal, a sever belonging to a first network and an authentication server belonging to a second network other than the first network. For example, the first network may be a wireless LAN or a digital subscriber line network, and any other network as would be understood in the art. Furthermore, the second network may be a mobile phone network.

In the exemplary communication system, the wireless terminal transmits identification information to the server of the first network. For example, the identification information may be stored in a memory in the wireless terminal. The memory may be a detachable memory card, such as a subscriber identity module (SIM) card or another type of memory medium. Furthermore, the identification information may be ineffective in an authentication by the first network but may be effective in an authentication in networks other than the second network.

The server of the first network routes the identification information to the authentication server of the second network. The authentication server performs an authentication procedure with the wireless terminal based on the identification information. The server provides services of the first network, such as data communication or voice communication, to the wireless terminal based on the authentication by the authentication server.

For example, the identification information may be transmitted and routed via a protocol utilized by the first network. The protocol may be a hyper text transfer (HTTP) protocol. Furthermore, the authentication may be performed based on a subscriber identity module (SIM).

Accordingly, even if the sever belonging to the first network dose not have functions according to the second network, the wireless terminal may be provided with the service of the first network based on the authentication by the second network.

Furthermore, the wireless terminal may transmit secondary identification information to the server. For example, the secondary identification information may be input by a user of the wireless terminal by using a user interface. The secondary identification information may be at least one of a user name, a password, a name of the second network, a name of an operator of the second network, or other information as would be understood in the art.

The server of the first network may route the secondary identification information to the authentication server. The authentication server may perform a secondary authentication based on the secondary identification information before performing the authentication. The server of the first network may route the identification information based on the secondary authentication by the authentication server of the second network.

For example, the secondary identification information may be transmitted and routed via a protocol utilized by the first network. The protocol may be the HTTP protocol. Furthermore, the secondary authentication may be performed based on the a remote dial authentication dial-in user service (RADIUS) protocol.

Exemplary embodiments of the invention are described below with reference to the attached figures. The described exemplary embodiments are intended to assist in the understanding of the invention and are not intended to limit the scope of the invention in any way.

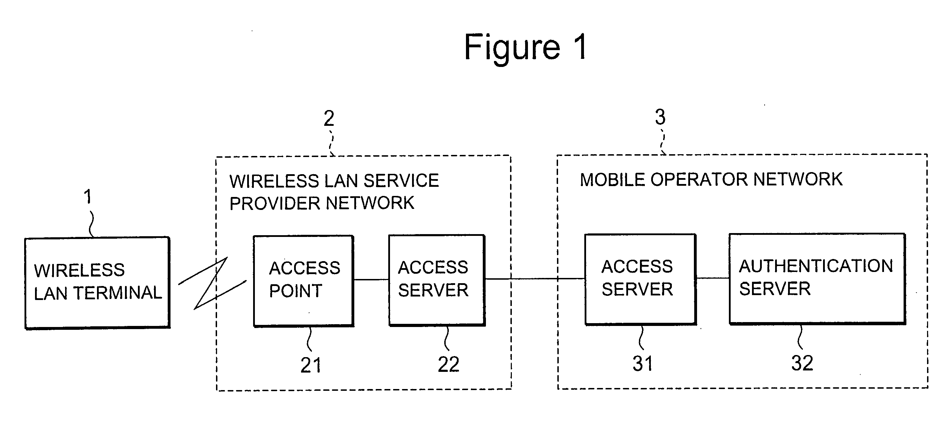

Figure 1 is a block diagram showing the configuration of a wireless LAN (local area network) system according to an exemplary embodiment of the present invention. In Figure 1, the wireless LAN system according to the exemplary embodiment of the present invention is configured so that a wireless LAN terminal 1 implemented with a SIM (Subscriber Identity Module) card (not shown) is authenticated by an authentication server 32 of a mobile operator network or a mobile phone network 3.

In this case, the wireless LAN terminal 1 is connected to the authentication server 32 via an access point 21 and an access server (hereinafter referred to as a wireless LAN access server) 22 of a wireless LAN service provider network 2, and an access server (hereinafter referred to a mobile network access server) 31 of the mobile operator network 3.

The access point 21 and the wireless LAN access server 22 of the wireless LAN service provider network 2 are held by a wireless LAN service provider for providing wireless LAN services. The access point 21 and the server 22 do not have 3GPP functionality.

The mobile network access server 31 and the authentication server 32 of the mobile operator network 3 are provided by a mobile operator. The authentication server 32 is provided with capabilities of an AAA (Authentication Authorization Accounting) server and performs authentication operations in accordance with EAP-AKA (Extensible Authentication Protocol - Authentication and Key Agreement) and EAP-SIM specified in 3GPP (3rd Generation Partnership Project).

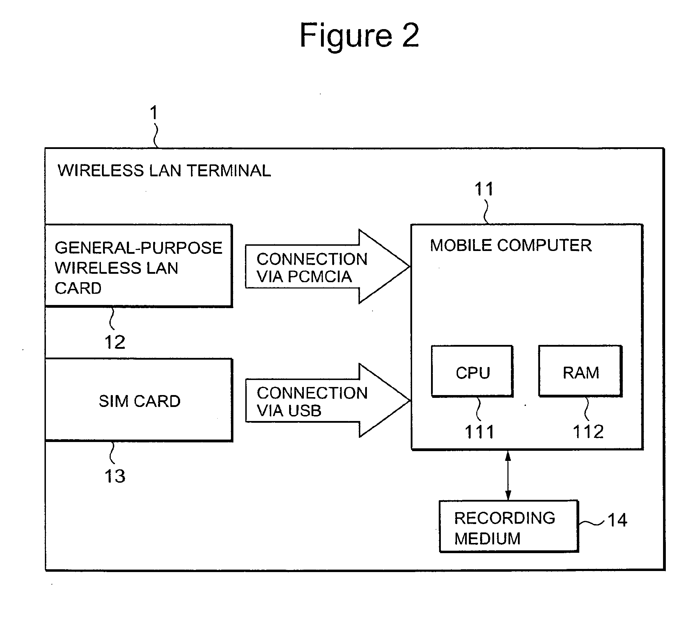

Figure 2 is a block diagram showing an exemplary structure of the wireless LAN terminal 1 in Figure 1. In Figure 2, the wireless LAN terminal 1 comprises a mobile computer 11 provided with a CPU (central processing unit) 111 and a RAM (random access memory) 112, a recording medium 14 in which programs to be executed on the mobile computer 11 are stored, a general-purpose wireless LAN card 12, and a SIM card 13 detachably mounted thereon.

The wireless LAN card 12 is a transceiver connected with the mobile computer 11 via a PCMCIA (Personal Computer Memory Card International Association) interface. The wireless LAN terminal 1 may be included within a mobile computer 11 in this exemplary embodiment.

The SIM card 13 is a detachable IC card, which stores information for an authentication, connected with the mobile computer 11 via a USB (Universal Serial Bus) interface. The SIM card 13 is mounted in a holder-type adapter (not shown), which is provided with the USB interface. An adapter of a connection type other than the USB interface, such as the PCMCIA interface and Bluetooth®, may be also applicable to this exemplary embodiment. The SIM card may be replaced by any other memory medium which can memorize the information for an authentication.

In the mobile computer 11 is a controller configured to control wireless LAN terminal. The mobile computer is configured to load a program from the recording medium 14 onto the RAM 112 and to execute the program. While executing the program, the mobile computer is configured to perform an authentication with the authentication server 32, utilizing the wireless LAN card 12 and the SIM card 13. The wireless LAN terminal 1 may be a PDA (personal digital assistant) or a desk-top computer.

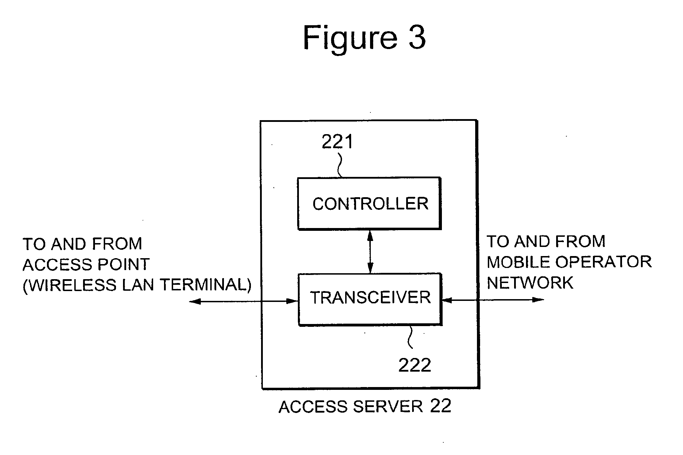

Figure 3 shows an exemplary structure of the access server 22. The access server 22 comprises a controller 221 and a transceiver 222. The transceiver 222 is configured to transmit and receive signals or information to and from the wireless LAN terminal 1 via the access point 21. Furthermore, the transceiver 222 is configured to transmit and receive signals or information to and from the mobile operator network 3. For example, the transceiver 222 may comprises a receiver, a transceiver, an amplifier coupled with at least one of the transceiver or the receiver, a modulator coupled to the transceiver, a demodulator coupled to the receiver, and so on.

The controller 221 is configured to control the access server 22, in conjunction with the transceiver 221, to achieve an authentication operation according to the exemplary embodiment. Specifically, the controller 222 is configured to route signals from the wireless LAN terminal 1 to the mobile operator network 3 and to route signals from the mobile operator network 3 to the wireless LAN terminal 1. Furthermore, the controller 221 is configured to provide LAN service to the wireless LAN terminal 1 based on an authentication performed by the mobile operator network 3. For example, the controller 221 may comprise a CPU, a memory medium coupled with the CPU, and so on. Furthermore, the access point 21 may be incorporated within the access sever 22.

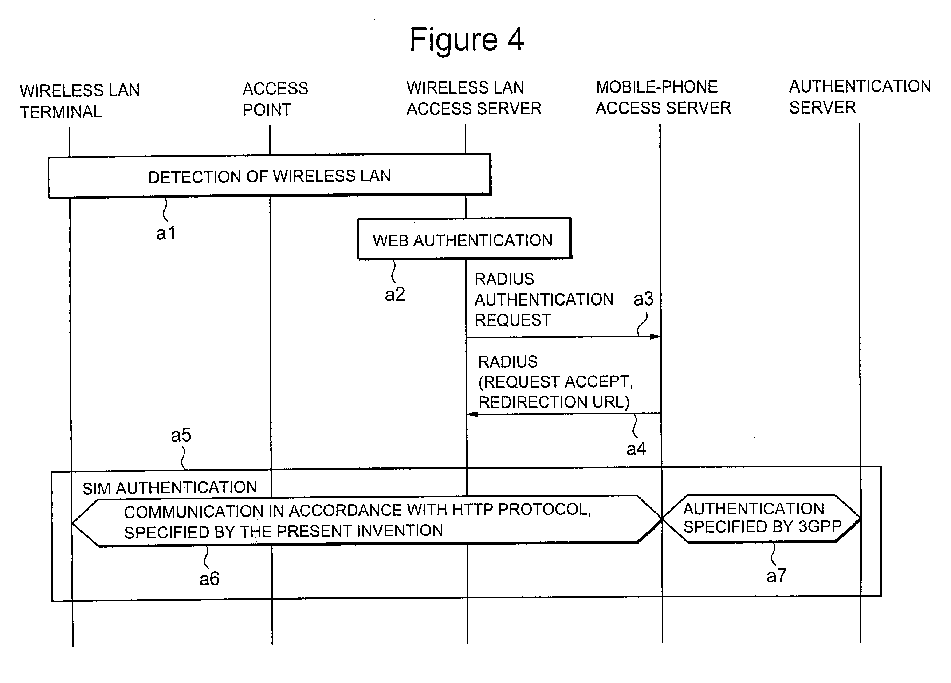

Figure 4 is a sequence chart showing authentication operation of the wireless LAN terminal 1 according to an exemplary embodiment of the present invention. The authentication operation of the wireless LAN terminal 1 according to an exemplary embodiment of the present invention will be described with reference to Figures 1 to 3.

In the authentication operation of the wireless LAN terminal 1 described above, the wireless LAN terminal 1 detects the wireless LAN network 2 comprising the access point 21 and the wireless LAN access server 22 (a1 of Figure 4). The access sever 22 performs a web authentication (a2 of Figure 4) with the wireless LAN terminal 1.

Generally the web authentication comprises prompting a user to input a user name and a password to a browser and determining whether to permit or to not permit further web access and Internet services, such as e-mail, based on the input user name and the password.

In many cases, the operation of web authentication may be in accordance with the HTTPS (Hypertext Transfer Protocol over Transport Layer Security/Secure Sockets Layer) protocol, which is HTTP (Hypertext Transfer Protocol) protocol provided with a security function.

In this exemplary embodiment, the access server 22 prompts a user of the wireless LAN terminal 1 to input a user ID (identification information) and a password. In response to receiving the user ID and password, the access server 22 notifies or routes the user name and the password, along with a RADIUS (Remote Authentication Dial-In User Service) authentication request, to the mobile phone network 3 (a3 of Figure 4). Then, the access server 31 in the mobile operator network performs a subscriber authentication as a RADIUS server.

The user ID may be a mobile operator name, and may be related to an address of the mobile network access server 31 of the mobile operator network 3 by using a DNS (domain name system) in the wireless LAN access server 22. Thereby, the user ID and password may be used to route information to the mobile network access server.

The mobile network access server 31 receives the user ID and the password with the RADIUS authentication request (a3 of Figure 4), and may perform subscriber authentication to some extent by referring to the password information as well as the user ID. Specifically, the mobile network access server 31 searches a database of RADIUS authentication for the user ID and password. By performing this operation, it is possible to prevent a fraudulent or malicious SIM authentication procedure from being activated.

The mobile network access server 31 returns a RADIUS signal (a4 of Figure 4) after subscriber authentication based on the user ID and password. The mobile network access server 31 may return the RADIUS signal using Redirection URL (Uniform Resource Locator) capability, which is a vendor-specific RADIUS extension defined by the WiFi (Wireless Fidelity) Alliance.

The wireless LAN access server 22 receives the RADIUS signal and reconnects to a specified URL based on the RADIUS signal. Accordingly, the authentication processing of the wireless LAN terminal 1 can be continuously performed by the mobile network access server 31.

After the wireless LAN access server 22 receives the RADIUS signal, the wireless LAN terminal 1 performs SIM authentication between its SIM card 13 and the authentication server 32 in the mobile operator network 3 (a5 of Figure 4). The SIM authentication operation comprises mainly two kinds of communications. One is communication in accordance with the HTTP protocol which operates between the wireless LAN terminal 1 and the mobile network access server 31 (a6 of Figure 4), and the other is communication in accordance with the EAP-AKA or EAP-SIM protocol specified by 3GPP, which operates between the mobile network access server 31 and the authentication server 32 (a7 of Figure 4). That is, the information transfer during SIM authentication is performed via the application level, rather than the EAP level which is above the IEEE (Institute of Electrical and Electronics Engineers) 802.1x layer.

According to this exemplary embodiment, the HTTP protocol, with the following operations, performed between the wireless LAN terminal 1 and the mobile network access server 31, enables the EAP-AKA or EAP-SIM protocol specified by 3GPP to be performed between the mobile network access server 31 and the authentication server 32. Specifically, the mobile network access server 31 communicates with the LAN terminal 1 via HTTP and acquires information required for EPA-AKA or EPA-SIM authentication. Furthermore, the mobile network access server 31 converts the information to information according to the EPA-AKA or EPA-SIM protocol and performs authentication with the authentication server 32 based on the converted information.

The operations described above include: (1) reading of an IMSI (International Mobile Subscriber Identity) that is a subscriber identifier defined inside a SIM card, (2) operation of EAP-AKA authentication, (3) operation of EAP-SIM authentication, and (4) operation between a UE (user equipment) and a 3GPP AAA (Authentication Authorization Accounting) server, which is described in the 3GPP specification (e.g., "3G Security; Wireless Local Area Network (WLAN) Interworking Security (Release 6), 6 Security Mechanisms" (3GPP TS 33.234 V6.1.0, pp. 20-42, June 2004).

By performing the procedures described above, the SIM authentication operation of the wireless LAN terminal 1 can be performed without providing 3GPP-specific functions to the wireless LAN card 12, the access point 21, and the wireless LAN access server 22.

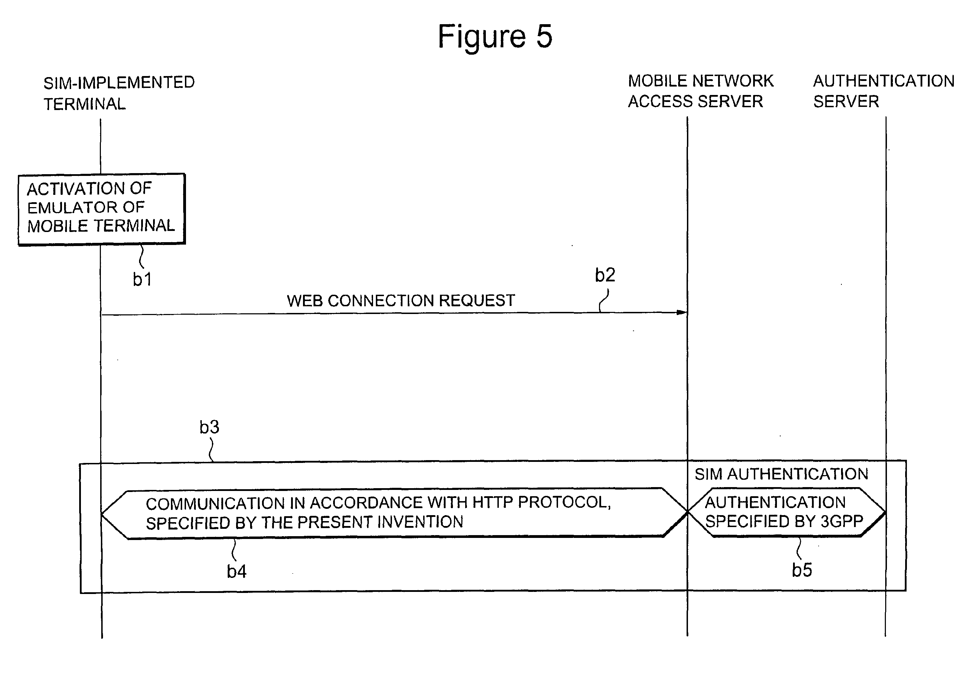

Figure 5 is a sequence chart showing the authentication operation of a wireless LAN terminal according to another exemplary embodiment of the present invention. The basic configuration of this exemplary embodiment of the present invention is similar to the configuration of the first exemplary embodiment described above except that a different access method is used to access wireless LAN services. The effect of the above-described exemplary embodiment of the present invention also can be achieved by this other exemplary embodiment of the present invention.

Figure 5 shows a procedure for a method of performing SIM authentication with a common Internet connection environment such as an xDSL (xDigital Subscriber Line). In this procedure, a SIM-implemented terminal, a computer on which a SIM card 13 is mounted, is to be SIM-authenticated.

In the SIM-implemented terminal, by activating a program for emulating a mobile terminal (b1 of Figure 4), a Web connection request is transmitted to the mobile network access server 31 (b2 of Figure 5).

The SIM-implemented terminal performs a SIM authentication operation between the SIM card 13 and the authentication server 32 of the mobile operator network 3 (b3 of Figure 5). This SIM authentication operation is similar to that in the first embodiment described above.

Once the above-described SIM authentication is accepted, the computer connected to the Internet can operate as a mobile terminal, and services, such as voice communication, short mail and mobile Web services, which are provided to mobile-phone subscribers can be utilized with the use of a microphone, a speaker, a keyboard, a screen and the like of the computer under a favorable operation environment.

Thus, in this exemplary embodiment, a mobile-phone subscriber can utilize commonly used wireless LAN services, without specially signing a contract for the wireless LAN services, by performing a SIM authentication procedure via a mobile operator. This makes it possible for the mobile phone subscriber to utilize the wireless LAN system by using the SIM authentication according to this exemplary embodiment, even in a region where mobile-phone services have not spread yet or a region where mobile-phone roaming services are not contracted.

Furthermore, according to an exemplary aspect of the present invention, the authentication operation specified by 3GPP may be performed by utilizing a general purpose wireless LAN card and wireless LAN access points.

In this exemplary embodiment, in the case where the SIM authentication is performed for a computer connected to the Internet via an xDSL or the like, it is possible to use services typically obtained through a mobile phone in a stable and high-speed communication environment without being concerned with call costs, such as fees for the mobile phone communication. In this case, operations for various mobile-phone services can be enjoyed in a favorable operation environment by emulating a mobile terminal with a microphone, a speaker, a keyboard, a screen and the like of a computer.

As described above, in a network according to the exemplary embodiments of the present invention, the traditional idea that a SIM card inserted into a mobile phone is used only in conjunction with a mobile phone network is changed, and the SIM card becomes a tool used in the authentication of a user. Authentication by means of a SIM card may me considered as a means for authenticating access for any number of different systems or services, such as wireless LAN or xDSL (xDigital Subscriber Line), or other systems or services as would be understood by one of skill in the art.

Furthermore, in these exemplary embodiments, it is possible to add a great deal of value to the services provided by a mobile operator. A presence service in a mobile operator network is one of examples of such a service. That is, even in a dead zone such as a basement or a region where mobile-phone services are not provided, it is possible for a user to transmit his presence information to presence group members via access means such as a wireless LAN or an xDSL.

Mr. Bob Metcalfe says, "The value of a network is proportional to the number of users squared." According to the exemplary embodiments, users may access services provided by a mobile operator in various ways, providing an increase in the number of users. The increase in the number of users may drastically increase the value of the services of the mobile operator.

Although the exemplary embodiments of the present invention have been described above, it will be understood by those skilled in the art that the present invention should not be limited to the described preferred embodiment, but various changes and modifications can be made within the spirit and the scope of the present invention.

## Claims

1. An authentication method comprising:
transmitting primary identification information from a wireless terminal to a first network;
routing the primary identification information from the first network to a second network;
performing an authentication by the second network based on the primary identification information; and
providing a service of the first network to the wireless terminal based on a result of the authentication by the second network.

2. The authentication method according to claim 1, wherein the primary identification information is ineffective in an authentication by the first network.

3. The authentication method according to claim 1 or 2, wherein the primary identification information is transmitted via a protocol utilized by the first network.

4. The method according to claim 1, 2 or 3, wherein the authentication is performed based on a subscriber identity module protocol.

5. The method according to any one of claims 1 to 4, wherein the first network is a wireless local area network or a digital subscriber line network, and the second network is a mobile phone network.

6. The method according to any one of claims 1 to 5, further comprising
transmitting secondary identification information from the wireless terminal to the first network;
routing the secondary information from the first network to the second network; and
performing a secondary authentication by the second network based on the secondary identification information before performing the authentication based on the primary identification information.

7. The authentication method according to claim 6, wherein the primary identification information and the secondary identification information are transmitted via a protocol utilized by the first network.

8. The authentication method according to claim 7, wherein the protocol is Hyper text transfer protocol.

9. The method according to claim 6, 7 or 8, wherein the secondary authentication is performed based on a remote dial authentication dial-in user service protocol.

10. The method according to claim 6, 7, 8 or 9, wherein the secondary identification information is input by a user of the wireless terminal, and the primary identification information is stored in the wireless terminal.

11. The authentication method according to claim 10, wherein the secondary identification information is at least one of a password, a user name, and a name of the mobile phone network.

12. The method according to any one of claims 1 to 11, wherein the primary identification information is stored in a detachable card attached to the wireless terminal.

13. The method according to claim 12, wherein the primary identification information is effective in an authentication by at least a third network, different from the first network and second network.

14. The method according to any one of claims 6 to 13, wherein the authentication based on the primary identification information is performed based on a subscriber identity module protocol, and the secondary authentication is performed based on a remote dial authentication dial-in user service protocol.

15. The method according to any one of claims 6 to 14, wherein the first network is one of a wireless local area network or a digital subscriber line network, and the second network is a mobile phone network.

16. A communication system, comprising:
a wireless terminal;
a fist network comprising:
a sever; and
a second network, coupled with the first network, comprising:
an authentication server,
wherein
the wireless terminal comprises
a memory configured to store primary identification information; and
a terminal controller, coupled to the memory, configured to transmit the primary identification information to the server, and the server comprises;
a server controller, coupled to a server transceiver, configured to receive the primary identification information from the wireless terminal, to route the primary identification information to the authentication server, and to provide service of the first network to the wireless terminal based on an authentication by the authentication server based on the primary identification information, and
the authentication server is configured to receive the primary identification information, and to perform the authentication based on the primary identification information.

17. The communication system according to claim 16, wherein
the terminal controller is configured to transmit secondary identification information to the sever,
the server controller is configured to route the secondary information to the authentication server before routing the primary identification information, the server controller routes the primary identification information based on secondary authentication by the authentication server based on the secondary identification information, and
the authentication server is configured to perform a secondary authentication based on the secondary identification information before performing the authentication based on the primary identification information.

18. A server, comprising:
a controller configured
to receive primary identification information from the wireless terminal,
to route the primary identification information to the authentication server, which belongs to second network other than a first network to that the sever belongs, and
to provide service of the first network to the wireless terminal based on an authentication by the authentication server based on the primary identification information.

19. The sever according to claim 18, wherein the primary identification information is ineffective in an authentication by the first network.

20. The server according to claim 18 or 19, wherein the primary identification information is received via a protocol utilized by the first network.

21. The server according to claim 18, 19 or 20, wherein
the controller is configured to receive secondary identification information from the wireless terminal and to route the secondary information to the authentication server before routing the identification server, and the controller routes the primary identification information based on a secondary authentication by the authentication server based on the secondary identification information.

22. The server according to claim 21, wherein the primary identification information and the secondary identification information are received via a protocol utilized by the first network.

23. The server according to claim 22, wherein the protocol is Hyper text transfer protocol.

24. The server according to claim 21, 22 or 23, wherein the secondary authentication is performed based on a remote dial authentication dial-in user service protocol.

25. The server according to claim 21, 22, 23 or 24, wherein the secondary identification information is input by a user of the wireless terminal, and the primary identification information is stored in the wireless terminal.

26. The server according to claim 25, wherein the secondary identification information is at least one of a password, user name or name of the mobile phone network.

27. The server according to any one of claims 18 to 26, wherein the primary identification information is stored in a detachable card attached to the wireless terminal.

28. The server according to claim 27, wherein the identification information is effective in an authentication by a communication network other than the first network and second network.

29. The server according to any one of claims 18 to 28, wherein the authentication is performed based on a subscriber identity module protocol.

30. The server according to any one of claims 18 to 29, wherein the first network is one of a wireless local area network or a digital subscriber line network, and the second network is a mobile phone network.

31. A server, comprising:
a means for receiving primary identification information from the wireless terminal;
a means for routing the primary identification information to an authentication server, which belongs to a second network other than a first network to which the sever belongs, and
a means for providing service of the first network to the wireless terminal based on an authentication by the authentication server based on the primary identification information.

32. The server according to claim 31, wherein
the means for receiving receives secondary identification information from the wireless terminal and
the means for routing routes the secondary information to the authentication server before routing the identification server and routes the primary identification information based on a secondary authentication by the authentication server based on the secondary identification information.

33. A wireless terminal, comprising:
a memory configured to store primary identification information; and
a controller, coupled to the memory, configured to transmit the primary identification information to the server belonging to a first network, to perform an authentication with an authentication server belonging to a second network other than the first network based on the primary identification information, and to perform communication provided by the first network based on the authentication.

34. A wireless terminal, comprising:
means for storing primary identification information; and
means for transmitting the primary identification information to the server belonging to a first network;
means for performing an authentication with an authentication server belonging to a second network other than the first network based on the primary identification information; and
means for performing communication provided by the first network based on the authentication.
